# EUROPÄISCHE PATENTSCHRIFT

(11) **EP 4 561 916 B1**
(45) Veröffentlichungstag und Bekanntmachung des Hinweises auf die Patenterteilung: **03.06.2026**
(21) Anmeldenummer: 23748253.4
(22) Anmeldetag: 25.07.2023
(51) Int. Cl.: B65G 1/04, B65G 1/02

(54) **WARENLAGER ZUM EIN- UND AUSLAGERN VON AUF LADUNGSTRÄGERN ANGEORDNETEN WAREN ODER WARENGEBINDEN**
WAREHOUSE FOR THE STORAGE AND RETRIEVAL OF GOODS OR BUNDLES OF GOODS ARRANGED ON LOAD CARRIERS
ENTREPÔT DE STOCKAGE ET DE RÉCUPÉRATION DE MARCHANDISES OU DE LOTS DE MARCHANDISES PLACÉS SUR DES PORTE-CHARGES

(30) Priorität: 28.07.2022 DE 102022119000
(43) Veröffentlichungstag der Anmeldung: 04.06.2025
(73) Patentinhaber: Nedcon B.V., 7005 AM Doetinchem (NL)
(72) Erfinder: BRUINS, Marc, 7071 GR Ulft (NL)
(74) Vertreter: Janke Scholl Patentanwälte PartG mbB
(86) Internationale Anmeldenummer: PCT/EP2023/070577
(87) Internationale Veröffentlichungsnummer: WO 2024/023090

(56) Entgegenhaltungen:
- EP-A1- 2 392 524
- EP-B1- 3 699 112
- JP-A- 2012 106 814

## Beschreibung

Die vorliegende Erfindung betrifft ein Warenlager, eingerichtet zum Ein- und Auslagern von auf Ladungsträgern angeordneten Waren oder Warengebinden mittels eines Verteilerfahrzeugs, mit einem Gestell, wobei das Gestell durch das Verteilerfahrzeug befahrbare Gassen und benachbart zu den Gassen angeordnete Lagerplätze für die Ladungsträger aufweist, wobei entlang der Gassen parallel zueinander verlaufende Laufschienen angeordnet sind, innerhalb derer das Verteilerfahrzeug mit Laufrollen des Verteilerfahrzeugs geführt ist und wobei eine jeweilige Laufschiene zwei oder mehr Schienenelemente aufweist, die jeweils einen Abschnitt einer Lauffläche für die Laufrollen des Verteilerfahrzeugs ausbilden. Ein solches Warenlager ist z.B. aus der EP 3 699 112 B1 bekannt.

Derartige Warenlager dienen dazu, Ladungsträger mit darauf angeordneten Waren oder Warengebinden insbesondere vollautomatisch mittels des Verteilerfahrzeugs auf den Lagerplätzen zu platzieren oder von den Lagerplätzen zu entnehmen. Solche Warenlager weisen häufig mehrere Etagen bzw. Ebenen auf, die jeweils in Gassen und Lagerplätze unterteilt sind. Ein Warenlager kann sich daher über mehrere Stockwerke bzw. Geschosshöhen erstrecken und beispielsweise eine Grundfläche von mehreren 100 m² einnehmen.

Die Schienenelemente weisen bezüglich ihrer Länge die üblichen Fertigungstoleranzen auf. Dies kann dazu führen, dass benachbarte Schienenelemente stirnseitig einen Abstand zueinander aufweisen, sodass ein Schlitz bzw. eine Rille in der Lauffläche gebildet ist. Beim Überrollen dieser Rille durch das Verteilerfahrzeug wird ein Stoß in das Verteilerfahrzeug eingeleitet, was zu einer Geräuschentwicklung und längerfristig zu einer Beschädigung der Komponenten des Verteilerfahrzeugs führen kann. Weiter kann eine derartige Stoßbeanspruchung dazu führen, dass von dem Verteilerfahrzeug auf einem Ladungsträger transportierte Waren oder Warengebinde verrutschen, beschädigt werden oder herunterfallen. Weiter können Fertigungstoleranzen, die die Länge der Schienenelemente betreffen, die Möglichkeit einer präzisen Montage des Gestells einschränken. So können sich die Fertigungstoleranzen in Längsrichtung beispielsweise derart summieren, dass es zu einem Versatz der Schienenelemente im Bereich von sich kreuzenden Gassen kommt.

In der EP 3 699 112 B1 und der DE 10 2014 114 978 A1 sind bereits Maßnahmen beschrieben, in einem solchen Warenlager Geräusche und Erschütterungen im Bereich aufeinanderfolgender Schienenelemente zu reduzieren.

Vor diesem Hintergrund liegt der vorliegenden Erfindung die technische Problemstellung zugrunde, ein Warenlager der eingangs genannten Art anzugeben, das einen sicheren und verschleißfreien Betrieb eines Verteilerfahrzeugs und eine präzise Montage des Gestells ermöglicht.

Die voranstehend beschriebene, technische Problemstellung wird durch ein Warenlager gemäß Anspruch 1 gelöst. Weitere Ausgestaltungen der Erfindung ergeben sich aus den abhängigen Ansprüchen und der nachstehenden Beschreibung.

Die Erfindung betrifft ein Warenlager, eingerichtet zum Ein- und Auslagern von auf Ladungsträgern angeordneten Waren oder Warengebinden mittels eines Verteilerfahrzeugs ("Shuttle"), mit einem Gestell, wobei das Gestell durch das Verteilerfahrzeug befahrbare Gassen und benachbart zu den Gassen angeordnete Lagerplätze für die Ladungsträger aufweist, wobei entlang der Gassen parallel zueinander verlaufende Laufschienen angeordnet sind, innerhalb derer das Verteilerfahrzeug mit Laufrollen des Verteilerfahrzeugs geführt ist und wobei eine jeweilige Laufschiene zwei oder mehr Schienenelemente aufweist, die jeweils einen Abschnitt einer Lauffläche für die Laufrollen des Verteilerfahrzeugs ausbilden. Das Warenlager zeichnet sich erfindungsgemäß dadurch aus, dass einander zugewandte Stirnseiten benachbarter Schienenelemente einen Abstand zueinander aufweisen, wobei mindestens eine Stirnseite mindestens eines Schienenelements abgeschrägt ist und wobei in dem Abstand zwischen den Stirnseiten ein keilförmiges Ausgleichselement angeordnet ist, das einen Abschnitt der Lauffläche ausbildet und an den Stirnseiten anliegt. Das Ausgleichselement kann insbesondere bündig an den Stirnseiten anliegen.

Das Ausgleichselement ermöglicht es, Längentoleranzen der Schienenelemente auszugleichen. Durch seine Keilform kann das Ausgleichselement sowohl ein Übermaß, d. h. bei ihre Länge betreffend zu großen Schienenelementen, als auch ein Untermaß, d. h. bei ihre Länge betreffend zu kurzen Schienenelementen, ausgleichen. Denn die Keilform des Ausgleichselements ermöglicht durch ein Querverschieben des Ausgleichselements die Überbrückung verschiedener, zwischen den Stirnseiten der Schienenelemente gebildeter Abstände.

Gemäß einer Ausgestaltung des Warenlagers kann vorgesehen sein, dass beide einander zugewandte Stirnseiten der benachbarten Schienenelemente abgeschrägt sind. So können die Schienenelemente insbesondere spiegelsymmetrisch zu einer quer zur Längserstreckung der Schienenelemente verlaufenden Ebene ausgebildet sein. Gemäß alternativer Ausgestaltungen des Warenlagers kann vorgesehen sein, dass lediglich eine Stirnseite eines Schienenelements abgeschrägt ist, während eine an einem der abgeschrägten Seite abgewandten Ende gebildete Stirnseite des Schienenelements nicht abgeschrägt ist.

Es kann vorgesehen sein, dass die einander zugwandten Stirnseiten der benachbarten Schienenelemente eine keilförmige Aussparung begrenzen, in der das Ausgleichselement positioniert ist, wobei ein Keilwinkel der Aussparung einem Keilwinkel des Ausgleichselements entspricht. Demnach ist die Form des Ausgleichselements an die Form der einander zugwandten Stirnseiten angepasst, sodass in einfacher Weise eine insbesondere bündige Anlage zwischen den Schienenelementen und dem zwischen den Schienenelementen angeordneten Ausgleichselement erreicht werden kann.

Mindestens eine abgeschrägte Stirnseite des Schienenelements kann einen Winkel relativ zu einer Längserstreckung bzw. Längsachse der Laufschiene einschließen, der ungleich 90° ist. Insbesondere kann jedes Schienenelement an seinen beiden einander abgewandten Enden jeweils eine abgeschrägte Stirnseite aufweisen, die jeweils einen Winkel relativ zu einer Längserstreckung bzw. Längsachse der Laufschiene einschließt, der ungleich 90° ist.

Das Ausgleichselement kann einander abgewandte Stirnseiten aufweisen, mit denen das Ausgleichselement an den Stirnseiten der Schienenelemente anliegt.

Mindestens eine abgeschrägte Stirnseite des Ausgleichselements kann einen Winkel relativ zu einer Längserstreckung bzw. Längsachse der Laufschiene einschließen, der ungleich 90° ist. Insbesondere können beide einander abgewandte Stirnseiten des Ausgleichselements einen Winkel relativ zu einer Längserstreckung bzw. Längsachse der Laufschiene einschließen, der ungleich 90° ist.

Das Ausgleichselement kann eine spiegelsymmetrische Grundform aufweisen. So kann ein in einfacher Weise herstellbares und montierbares Ausgleichselement angegeben werden.

Gemäß einer Ausgestaltung des Warenlagers kann vorgesehen sein, dass das Ausgleichselement einen Mittelabschnitt aufweist, der zumindest abschnittsweise an den Stirnseiten der Schienenelemente anliegt, wobei das Ausgleichselement mindestens eine über eine Breite der Laufschiene hinweg auskragende Lasche aufweist, die an den Mittelabschnitt angrenzend gebildet ist. Die Lasche kann zum Handhaben des Ausgleichselements während der Montage und/oder der Demontage des Ausgleichselements dienen.

Insbesondere kann vorgesehen sein, dass das Ausgleichselement zwei einander abgewandte, an den Mittelabschnitt angrenzende und über die Breite der Laufschiene hinweg auskragende Laschen aufweist. Diese können der Fixierung des Ausgleichselements in Querrichtung dienen.

Alternativ oder ergänzend kann vorgesehen sein, dass mindestens eine Lasche des Ausgleichselements schmaler ausgebildet ist als der Mittelabschnitt. Die schmalere Form der Lasche verbessert die Handhabung des Ausgleichselements bei gleichzeitig geringem Materialeinsatz und Gewicht.

Um ein möglichst stoßfreies Überrollen des Ausgleichselements zu gewährleisten, kann vorgesehen sein, dass der durch das Ausgleichselement ausgebildete Abschnitt der Lauffläche auf gleicher Höhe mit den durch die Schienenelemente gebildeten Abschnitten der Lauffläche angeordnet ist. Insbesondere können der durch das Ausgleichselement ausgebildete Abschnitt der Lauffläche und die durch die Schienenelemente gebildeten Abschnitte der Lauffläche sprungfrei, d. h. mit bündigen Oberseiten, ineinander übergehen.

Nachfolgend wird die Erfindung anhand von Ausführungsbeispiele darstellenden Zeichnungen näher beschrieben. Es zeigen jeweils schematisch:
- Fig. 1: einen Ausschnitt einer Ebene des Warenlagers in einer Draufsicht;
- Fig. 2: einen Ausschnitt einer Laufschiene in einer Draufsicht ohne Ausgleichselement;
- Fig. 3: den Ausschnitt der Laufschiene aus Fig. 2 in einer Draufsicht mit Ausgleichselement;
- Fig. 4: das Ausgleichselement in einer weiteren Position;
- Fig. 5: das Ausgleichselement in einer weiteren Position;
- Fig. 6A: das Ausgleichselement in einer Draufsicht;
- Fig. 6B: ein weiteres Ausgleichselement in einer Draufsicht;
- Fig. 7: einen Ausschnitt einer Laufschiene in einer Draufsicht ohne Ausgleichselement.

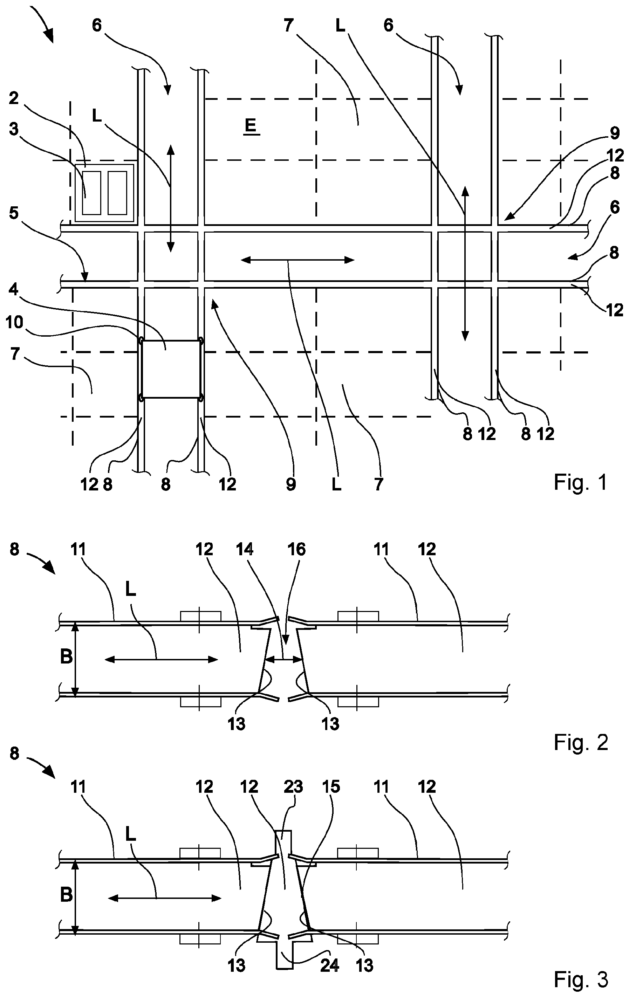

Figur 1 zeigt eine Lagerebene E eines Warenlagers 1 in einem Ausschnitt in einer Draufsicht. Das Warenlager 1 weist eine Mehrzahl derartiger Lagerebenen E auf, die senkrecht zur Bildebene betrachtet, d. h. in vertikaler Richtung, übereinander angeordnet sind.

Das Warenlager 1 ist zum Ein- und Auslagern von auf Ladungsträgern 2 angeordneten Waren 3 oder Warengebinden 3 mittels eines Verteilerfahrzeugs 4 ("Shuttle") eingerichtet.

Das Warenlager 1 hat ein Gestell 5, welches die statische Grundkonstruktion des Warenlagers bildet.

Das Gestell 5 weist durch das Verteilerfahrzeug 4 befahrbare Gassen 6 und benachbart zu den Gassen 6 angeordnete Lagerplätze 7 für die Ladungsträger 2 auf. Die Lagerplätze 7 sind durch die gestrichelten Linien angedeutet, die eine rasterartige Anordnung der Lagerplätze 7 zeigen.

Entlang der Gassen 6 sind parallel zueinander verlaufende Laufschienen 8 angeordnet. Wie der schematischen Ansicht gemäß Figur 1 zu entnehmen, kreuzen sich die Gassen 6 und deren Laufschienen 8 im Bereich von Kreuzungen 9.

Das Verteilerfahrzeug 4 ist mit seinen Laufrollen 10 innerhalb der Laufschienen 8 geführt.

Jede Laufschiene 8 weist zwei oder mehr Schienenelemente 11 auf, die jeweils einen Abschnitt einer Lauffläche 12 für die Laufrollen 10 des Verteilerfahrzeugs 4 ausbilden (Figur 2).

Wie Figur 2 zu entnehmen, weisen einander zugewandte Stirnseiten 13 aufeinanderfolgender Schienenelemente 11 einen Abstand 14 zueinander auf. Vorliegend sind beide Stirnseiten 13 der benachbarten Schienenelemente 11 abgeschrägt ausgeführt. Mit "abgeschrägt" ist hier gemeint, dass die betreffende Stirnseite 13 nicht rechtwinklig, sondern schräg zu der Längsrichtung L der Laufschiene 8 verläuft. Der Abstand 14 verringert sich daher über eine Breite B der Schienenelemente 11 betrachtet.

In dem Abstand zwischen den einander zugewandten Stirnseiten 13 der benachbarten Schienenelemente 11 ist ein keilförmiges Ausgleichselement 15 angeordnet, das einen Abschnitt der Lauffläche 12 ausbildet und das bündig an den Stirnseiten 13 der benachbarten Schienenelemente 11 anliegt (Fig. 3).

Das Ausgleichselement 15 überbrückt daher den zwischen den einander zugewandten Stirnseiten 13 der benachbarten Schienenelemente 11 gebildeten Abstand 14 und füllt diesen aus, so dass eine im Wesentlichen geschlossene Lauffläche 12 für die Laufrollen 10 des Verteilerfahrzeugs 4 gebildet ist.

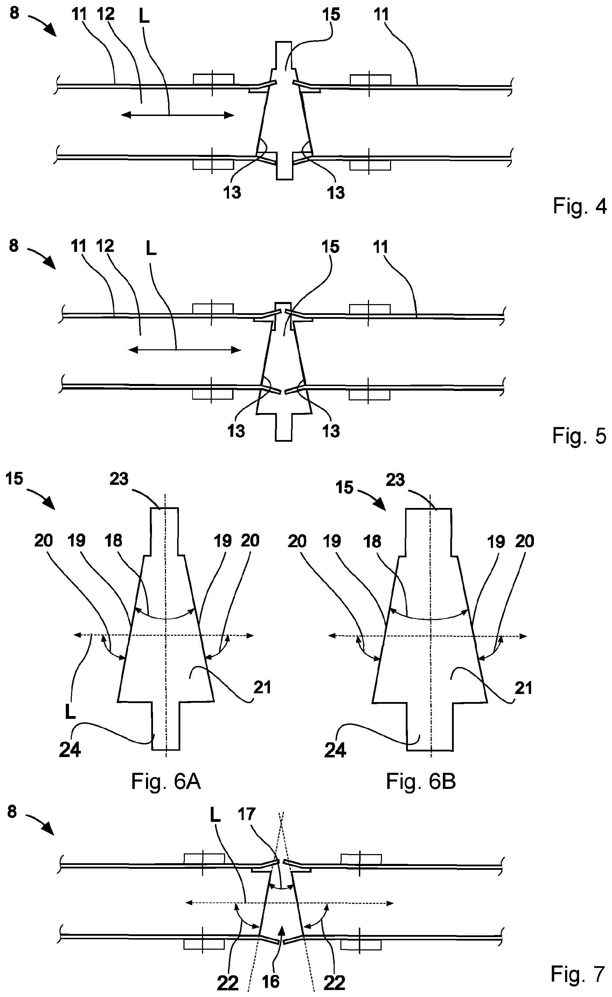

Vorliegend begrenzen die einander zugewandten Stirnseiten 13 der benachbarten Schienenelemente 11 eine keilförmige Aussparung 16, in der das Ausgleichselement 15 positioniert ist. Dabei entspricht ein Keilwinkel 17 der Aussparung 16 einem Keilwinkel 18 des Ausgleichselements 15, wobei die Keilwinkel 17, 18 in den Figuren 6 und 7 dargestellt sind.

Figur 3 zeigt einen fertig montierten Zustand des Ausgleichselements 15 zwischen den Schienenelementen 11, wobei in dem in Figur 3 gezeigten Fallbeispiel die Schienenelemente 11 in ihrer Längsrichtung L betrachtet jeweils genau das vorgesehene Sollmaß aufweisen. Das Ausgleichselement 15 ist in diesem Fall in einer Richtung quer zur Längsrichtung L betrachtet im Wesentlichen mittig zwischen den Schienenelementen 11 positioniert.

Figur 4 zeigt einen fertig montierten Zustand des Ausgleichselements 15 zwischen den Schienenelementen 11, wobei in dem in Figur 4 gezeigten Fallbeispiel die Schienenelemente 11 in ihrer Längsrichtung L betrachtet ein Untermaß aufweisen, d. h. zu kurz sind. In diesem Fall ist das Ausgleichselement 15 weiter in die zwischen den Stirnseiten 13 gebildete, keilförmige Aussparung 16 eingerückt, um den im Vergleich zur Figur 3 größeren Abstand zwischen den Stirnseiten 13 zu überbrücken und trotz des zu geringen Längenmaßes der Schienenelemente 11 eine im Wesentlichen geschlossene Lauffläche 12 bereitzustellen.

Figur 5 zeigt einen fertig montierten Zustand des Ausgleichselements 15 zwischen den Schienenelementen 11, wobei in dem in Figur 5 gezeigten Fallbeispiel die Schienenelemente 11 in ihrer Längsrichtung L betrachtet ein Übermaß aufweisen, d. h. zu lang sind. In diesem Fall ist das Ausgleichselement 15 aus der zwischen den Stirnseiten 13 gebildeten, keilförmigen Aussparung 16 ausgerückt, um den im Vergleich zur Figur 3 und Figur 4 kleineren Abstand zwischen den Stirnseiten 13 zu überbrücken und trotz des zu großen Längenmaßes der Schienenelemente 11 eine im Wesentlichen geschlossene Lauffläche 12 bereitzustellen.

Die Figur 6A zeigt das Ausgleichselement 15 in einer einzelnen Darstellung in einer Draufsicht. Das Ausgleichselement 15 weist einander abgewandte Stirnseiten 19 auf, die jeweils gerade verlaufen und mit denen das Ausgleichselement 15 im fertig montierten Zustand linienförmig an den Stirnseiten 13 der Schienenelemente 11 anliegt.

Das Ausgleichselement 15 ist spiegelsymmetrisch ausgebildet.

Die abgeschrägten Stirnseiten 19 des Ausgleichselements 15 schließen einen Winkel 20 relativ zu einer Längserstreckung L der Laufschiene 8 ein, der ungleich 90° ist. Im vorliegenden Beispiel beträgt der Winkel 20 ca. 80° und der Keilwinkel 18 ca. 20°. Gemäß alternativer Ausführungsbeispiele kann beispielsweise vorgesehen sein, dass der Keilwinkel bis zu ca. 45° beträgt.

Die Figur 6B zeigt eine alternative Ausgestaltung des Ausgleichselements 15, das sich durch einen breiteren Mittelabschnitt 21 von dem Ausgleichselement 15 der Figur 6A unterscheidet. So kann das Warenlager 1 beispielsweise zwei oder mehr Ausgleichselemente 15 aufweisen, die zwar die gleichen Winkel 20 und Keilwinkel 18 aufweisen, jedoch einen unterschiedlich breiten Mittelabschnitt 21 haben, um gegebenenfalls auch größere Abstände der Schienenelemente 11 zu überbrücken.

In Figur 7 sind die zwischen den Stirnseiten 13 der Schienenelemente 11 und der Längsrichtung L gebildeten Winkel 22 sowie der von den Stirnseiten 13 begrenzte Keilwinkel 17 gezeigt. Die Winkel 20 und 22 sind gleich groß bzw. weisen den gleichen Betrag auf. Die Winkel 17 und 18 sind gleich groß bzw. weisen den gleichen Betrag auf.

Das Ausgleichselement 15 weist den Mittelabschnitt 21 auf, der zumindest abschnittsweise an den Stirnseiten 13 der Schienenelemente 11 anliegt. Das Ausgleichselement 15 ist insgesamt ein flacher Blechstreifen von vorzugsweise einheitlicher Materialdicke. Bestandteil des flachen Blechstreifens sind zwei bis über die Breite B der Laufschiene 8 hinweg auskragende Laschen 23, 24, die an den Mittelabschnitt 21 angrenzend gebildet sind. Die Laschen 23, 24 sind in Draufsicht vorzugsweise schmaler ausgebildet, als der Mittelabschnitt 21.

Mittels der Laschen 23, 24 oder nur mittels einer der Laschen 23, 24 lässt sich das Ausgleichselement 15 durch ein Verklemmen in Querrichtung fixieren. Hierbei stützt sich die betreffende Lasche 23, 24 mit ihrer Unterseite auf einer Fläche ab, die sich an einem Bauteil des Gestells 5 befindet. Zugleich wird die betreffende Lasche, indem Druck auf ihre Oberseite ausgeübt wird, gegen die Fläche geklemmt. Dieser Druck auf die Oberseite der Lasche 23, 24 kann z.B. durch eine Schraube und vorzugsweise durch die Unterseite eines Schraubenkopfes ausgeübt werden.

Alternativ kann das Ausgleichselement 15 mit einer darunter angeordneten Fläche an einem Bauteil des Gestells 5 verklebt werden.

### Bezugszeichenliste

- 1: Warenlager
- 2: Ladungsträger
- 3: Waren / Warengebinde
- 4: Verteilerfahrzeug
- 5: Gestell
- 6: Gasse
- 7: Lagerplatz
- 8: Laufschiene
- 9: Kreuzung
- 10: Laufrolle
- 11: Schienenelement
- 12: Lauffläche
- 13: Stirnseite
- 14: Abstand
- 15: Ausgleichselement
- 16: Aussparung
- 17: Keilwinkel
- 18: Keilwinkel
- 19: Winkel
- 20: Winkel
- 21: Mittelabschnitt
- 22: Winkel
- 23: Lasche
- 24: Lasche
- B: Breite
- L: Längserstreckung / Längsrichtung / Längsachse

## Patentansprüche

1. Warenlager,
- eingerichtet zum Ein- und Auslagern von auf Ladungsträgern (2) angeordneten Waren (3) oder Warengebinden (3) mittels eines Verteilerfahrzeugs (4),
- mit einem Gestell (5),
- wobei das Gestell (5) durch das Verteilerfahrzeug (4) befahrbare Gassen (6) und benachbart zu den Gassen (6) angeordnete Lagerplätze (7) für die Ladungsträger (2) aufweist,
- wobei entlang der Gassen (6) parallel zueinander verlaufende Laufschienen (8) angeordnet sind, innerhalb derer das Verteilerfahrzeug (4) mit Laufrollen (10) des Verteilerfahrzeugs (4) geführt ist und
- wobei eine jeweilige Laufschiene (8) zwei oder mehr Schienenelemente (11) aufweist, die jeweils einen Abschnitt einer Lauffläche (12) für die Laufrollen (10) des Verteilerfahrzeugs (4) ausbilden,
**dadurch gekennzeichnet, dass**
- einander zugewandte Stirnseiten (13) benachbarter Schienenelemente (11) einen Abstand (14) zueinander aufweisen,
- wobei mindestens eine Stirnseite (13) mindestens eines Schienenelements (11) abgeschrägt ist und
- wobei zwischen den Stirnseiten (13) ein keilförmiges Ausgleichselement (15) angeordnet ist, das einen Abschnitt der Lauffläche (12) ausbildet und an den Stirnseiten (13) anliegt.

2. Warenlager nach Anspruch 1,
**dadurch gekennzeichnet, dass**
beide einander zugewandten Stirnseiten (13) der benachbarten Schienenelemente (11) abgeschrägt sind.

3. Warenlager nach einem der voranstehenden Ansprüche,
**dadurch gekennzeichnet, dass**
- die einander zugewandten Stirnseiten (13) eine keilförmige Aussparung (16) begrenzen, in der das Ausgleichselement (15) positioniert ist,
- wobei ein Keilwinkel (17) der Aussparung (16) einem Keilwinkel (18) des Ausgleichselements (15) entspricht.

4. Warenlager nach einem der voranstehenden Ansprüche,
**dadurch gekennzeichnet, dass**
mindestens eine abgeschrägte Stirnseite (13) des Schienenelements (11) einen Winkel (22) relativ zu einer Längserstreckung (L) der Laufschiene (8) einschließt, der ungleich 90° ist.

5. Warenlager nach einem der voranstehenden Ansprüche,
**dadurch gekennzeichnet, dass**
das Ausgleichselement (15) einander abgewandte Stirnseiten (19) aufweist, mit denen das Ausgleichselement (15) an den Stirnseiten (13) der Schienenelemente (11) anliegt.

6. Warenlager nach Anspruch 5,
**dadurch gekennzeichnet, dass**
mindestens eine abgeschrägte Stirnseite (19) des Ausgleichselements (15) einen Winkel (20) relativ zu einer Längserstreckung (L) der Laufschiene (8) einschließt, der ungleich 90° ist.

7. Warenlager nach einem der voranstehenden Ansprüche,
**dadurch gekennzeichnet, dass**
das Ausgleichselement (15) eine spiegelsymmetrische Grundform aufweist.

8. Warenlager nach einem der voranstehenden Ansprüche,
**dadurch gekennzeichnet, dass**
- das Ausgleichselement (15) einen Mittelabschnitt (21) aufweist, der zumindest abschnittsweise an den Stirnseiten (13) der Schienenelemente (11) anliegt,
- wobei das Ausgleichselement (15) mindestens eine über eine Breite (B) der Laufschiene (8) hinweg auskragende Lasche (23, 24) aufweist, die an den Mittelabschnitt (21) angrenzend gebildet ist.

9. Warenlager nach Anspruch 8,
**dadurch gekennzeichnet, dass**
- das Ausgleichselement (15) zwei einander abgewandte, an den Mittelabschnitt (21) angrenzende und über die Breite (B) der Laufschiene (8) hinweg auskragende Laschen (23, 24) aufweist
und/oder
- mindestens eine Lasche (23, 24) des Ausgleichselements (15) schmaler ausgebildet ist als der Mittelabschnitt (21).

10. Warenlager nach einem der voranstehenden Ansprüche,
**dadurch gekennzeichnet, dass**
- der durch das Ausgleichselement (15) ausgebildete Abschnitt der Lauffläche (12) auf gleicher Höhe mit den durch die Schienenelemente (11) gebildeten Abschnitten der Lauffläche (12) angeordnet sind,
- wobei der durch das Ausgleichselement ausgebildete Abschnitt der Lauffläche (12) und die durch die Schienenelemente (11) gebildeten Abschnitte der Lauffläche (12) insbesondere sprungfrei ineinander übergehen.

## Claims

1. A warehouse
- configured for storing and retrieving, by means of a distribution vehicle (4), goods (3) or bundles (3) of goods arranged on load carriers (2),
- having a rack (5),
- wherein the rack (5) has aisles (6), along which the distribution vehicle (4) can travel, and has storage spaces (7), arranged adjacent to the aisles (6), for the load carriers (2),
- wherein arranged along the aisles (6) are rails (8), which run parallel to each other and within which the distribution vehicle (4) is guided via rollers (10) of the distribution vehicle (4), and
- wherein a respective rail (8) has two or more rail elements (11), each forming a portion of a running surface (12) for the rollers (10) of the distribution vehicle (4),
**characterized in that**
- mutually facing end faces (13) of adjacent rail elements (11) are at a distance (14) from each other,
- wherein at least one end face (13) of at least one rail element (11) is beveled, and
- wherein arranged between the end faces (13) is a wedge-shaped compensation element (15), which forms a portion of the running surface (12) and contacts the end faces (13).

2. The warehouse as claimed in claim 1,
**characterized in that**
both mutually facing end faces (13) of the adjacent rail elements (11) are beveled.

3. The warehouse as claimed in any one of the preceding claims, **characterized in that**
- the mutually facing end faces (13) delimit a wedge-shaped recess (16), in which the compensation element (15) is positioned,
- wherein a wedge angle (17) of the recess (16) corresponds to a wedge angle (18) of the compensation element (15).

4. The warehouse as claimed in any one of the preceding claims, **characterized in that**
at least one beveled end face (13) of the rail element (11) encloses an angle (22), relative to a longitudinal extent (L) of the rail (8), which is not equal to 90°.

5. The warehouse as claimed in any one of the preceding claims, **characterized in that**
the compensation element (15) has mutually remote end faces (19), via which the compensation element (15) contacts the end faces (13) of the rail elements (11).

6. The warehouse as claimed in claim 5,
**characterized in that**
at least one beveled end face (19) of the compensation element (15) encloses an angle (20), relative to a longitudinal extent (L) of the rail (8), which is not equal to 90°.

7. The warehouse as claimed in any one of the preceding claims, **characterized in that**
the compensation element (15) has a mirror-symmetrical basic shape.

8. The warehouse as claimed in any one of the preceding claims, **characterized in that**
- the compensation element (15) has a central portion (21) which contacts, at least partially, the end faces (13) of the rail elements (11),
- wherein the compensation element (15) has at least one tab (23, 24) which adjoins the central portion (21) and projects beyond a width (B) of the rail (8).

9. The warehouse as claimed in claim 8,
**characterized in that**
- the compensation element (15) has two mutually remote tabs (23, 24) which adjoin the central portion (21) and project beyond the width (B) of the rail (8) and/or
- at least one tab (23, 24) of the compensation element (15) is narrower than the central portion (21).

10. The warehouse as claimed in any one of the preceding claims, **characterized in that**
- the portion of the running surface (12) formed by the compensation element (15) is arranged at the same height as the portions of the running surface (12) formed by the rail elements (11),
- wherein the portion of the running surface (12) formed by the compensation element and the portions of the running surface (12) formed by the rail elements (11) transition into one another, in particular without discontinuities.

## Revendications

1. Entrepôt
- mis au point pour le stockage et l'enlèvement de marchandises (3) ou d'emballages de marchandises (3) disposé(e)s sur des porte-charges (2) au moyen d'un véhicule de distribution (4),
- avec un cadre (5),
- le cadre (5) comportant des allées (6) pouvant être parcourues par le véhicule de distribution (4) et des emplacements de stockage (7) pour les porte-charges (2) disposés de manière adjacente aux allées (6),
- des rails de roulement (8) s'étendant parallèlement les uns aux autres étant disposés le long des allées (6), à l'intérieur desquels le véhicule de distribution (4) est guidé par des galets de roulement (10) du véhicule de distribution (4),
- chaque rail de roulement (8) comportant deux ou plusieurs éléments de rail (11), qui forment chacun une section d'une surface de roulement (12) pour les galets de roulement (10) du véhicule de distribution (4), **caractérisé en ce que**
- les faces frontales (13) tournées les unes vers les autres d'éléments de rail (11) adjacents présentent un espacement (14) les unes par rapport aux autres,
- au moins une face frontale (13) d'au moins un élément de rail (11) étant inclinée et
- un élément de compensation (15) en forme de coin étant disposé entre les faces frontales (13), lequel forme une section de la surface de roulement (12) et repose sur les faces frontales (13).

2. Entrepôt selon la revendication 1,
**caractérisé en ce que**
les deux faces frontales (13) tournées l'une vers l'autre des éléments de rail (11) adjacents sont inclinées.

3. Entrepôt selon l'une des revendications précédentes,
**caractérisé en ce que**
- les faces frontales (13) tournées l'une vers l'autre délimitent une évidement (16) cunéiforme, dans lequel est positionné l'élément de compensation (15),
- un angle de coin (17) de l'évidement (16) correspondant à un angle de coin (18) de l'élément de compensation (15).

4. Entrepôt selon l'une des revendications précédentes,
**caractérisé en ce que**
au moins une face frontale (13) inclinée de l'élément de rail (11) forme un angle (22) par rapport à une extension longitudinale (L) du rail de roulement (8), qui est différent de 90°.

5. Entrepôt selon l'une des revendications précédentes,
**caractérisé en ce que**
l'élément de compensation (15) comporte des faces frontales (19) opposées l'une à l'autre, avec lesquelles l'élément de compensation (15) repose sur les faces frontales (13) des éléments de rail (11).

6. Entrepôt selon la revendication 5,
**caractérisé en ce que**
au moins une face frontale (19) inclinée de l'élément de compensation (15) forme un angle (20) par rapport à une extension longitudinale (L) du rail de roulement (8), qui est différent de 90°.

7. Entrepôt selon l'une des revendications précédentes,
**caractérisé en ce que**
l'élément de compensation (15) présente une forme de base symétrique en miroir.

8. Entrepôt selon l'une des revendications précédentes,
**caractérisé en ce que**
- l'élément de compensation (15) comporte une section centrale (21) qui repose au moins par sections sur les faces frontales (13) des éléments de rail (11),
- l'élément de compensation (15) présentant au moins une patte (23, 24) faisant saillie au-delà d'une largeur (B) du rail de roulement (8), qui est formée de manière à jouxter la section centrale (21).

9. Entrepôt selon la revendication 8,
**caractérisé en ce que**
- l'élément de compensation (15) comporte deux pattes (23, 24) opposées l'une à l'autre, jouxtant la section centrale (21) et faisant saillie au-delà de la largeur (B) du rail de roulement (8)
et/ou
- au moins une patte (23, 24) de l'élément de compensation (15) étant formée de manière plus étroite que la section centrale (21).

10. Entrepôt selon l'une des revendications précédentes,
**caractérisé en ce que**
- la section de la surface de roulement (12) formée par l'élément de compensation (15) est disposée à la même hauteur que les sections de la surface de roulement (12) formées par les éléments de rail (11),
- la section de la surface de roulement (12) formée par l'élément de compensation et les sections de la surface de roulement (12) formées par les éléments de rail (11) se rejoignant en particulier sans sauts.
